# EUROPÄISCHE PATENTSCHRIFT

(11) **EP 1 080 696 B1**
(45) Veröffentlichungstag und Bekanntmachung des Hinweises auf die Patenterteilung: **19.05.2004**
(21) Anmeldenummer: 00118827.5
(22) Anmeldetag: 31.08.2000
(51) Int. Cl.: A61C 1/00, H02P 5/17, H02P 5/165, H02P 6/08

(54) **Drehzahlregelung an einem Elektrokleinstmotor für zahnärtztliche Zwecke**
Speed control for an electric miniature motor for dental purposes
Régulateur de vitesse pour un électromoteur miniature à application dentaire

(30) Priorität: 02.09.1999 DE 19942004
(43) Veröffentlichungstag der Anmeldung: 07.03.2001
(73) Patentinhaber: Sirona Dental Systems GmbH, 64625 Bensheim (DE)
(72) Erfinder: Ackermann, Werner, 64367 Mühltal (DE); Redemund, Sven, 64625 Bensheim (DE)
(74) Vertreter: Sommer, Peter

(56) Entgegenhaltungen:
- DD-A- 234 777
- DE-C- 4 412 413
- US-A- 4 803 410
- US-A- 5 534 763

## Beschreibung

Die Erfindung bezieht sich auf eine Drehzahlregelung an einem Elektrokleinstmotor für zahnärztliche Zwecke, so daß der Elektromotor in einem Drehzahlbereich zwischen 1.00 min⁻¹ und 40.000 min⁻¹ stets optimal regelbar ist.

DE 32 21 146 C1 offenbart ein zahnärztliches Handstück mit einem Gleichstromnebenschlussmotor, dessen Drehzahl mittels einer steuerbaren Spannungsquelle veränderbar ist. Im Motorstromkreis ist eine Unterbrecherschaltung angeordnet, ferner ist eine die Motorspannung abtastende und speichernde Abtast- und Speicherschaltung vorgesehen sowie ein Regler für die steuerbare Spannungsquelle. Diesem wird als Sollwert die Steuerspannung und als Istwert der jeweils von der Abtast- und Speicherschaltung gespeicherte Motorspannungswert zugeführt. Über eine Zeitsteuerschaltung wird einerseits die Unterbrechungsschaltung wiederholt kurzzeitig zum Unterbrechen des Motorstroms und die Abtast- und Speicherschaltung andererseits mit Verzögerung nach Beginn der Unterbrechung des Motorstroms jedoch vor deren Beendigung zur Abtastung des Motorspannungswertes veranlasst.

Die Regelung der Drehzahl eines Elektromotors kann einerseits über eine RI-Kompensation des inneren Spannungsabfalls erfolgen. Der Motorstrom wird dabei in Abhängigkeit von der Motorlast gemessen. Bei Drehzahlrückgang in Folge stärkerer Belastung wird ein höherer Motorstrom gemessen; umgekehrt steigt bei Belastungsrückgang die Drehzahl, wodurch ein kleinerer Motorstrom gemessen werden kann. Die gemessene Motorstromdifferenz wird auf eine Regeleinrichtung gegeben, die dann die Drehzahl auf den gewünschten Sollwert bringt. Der Vorteil dieser Motorregelung liegt in einem sehr ruhigen Laufverhalten des Motors bis in den oberen Drehzahlbereich. Nachteilig ist jedoch, daß im unteren, besonders aber im untersten Drehzahlbereich der Motor ein relativ kleines Drehmoment abgibt. Die Stromerhöhungen für eine Kompensationsmessung sind hier zu gering; dagegen machen sich die Kollektorverluste relativ stark bemerkbar. Bei der zweiten bekannten Regeleinrichtung wird die Drehzahl mittels EMK (elektromotorische Kraft) - Messung bei abgeschaltetem Motor ermittelt. Der Vorteil dieser Regelung liegt in einem sehr guten Drehmoment des Motors auch im untersten Drehzahlbereich. Die Regelung kann die angesprochenen Kollektorverluste der RI-Kompensation gut ausregeln, wodurch Drehzahlen mit hohen Drehmomenten bis auf 0 geregelt werden können. Nachteilig bei diesem Regelverfahren ist, daß sich im oberen Drehzahlbereich unter Umständen ein unruhiger Lauf einstellen kann, der zu Vibrationen führen kann. Der Grund hierfür liegt in der systembedingten Motorabschaltung, die für die EMK-Messung notwendig ist.

Aus DE 44 12 413 C1 ist eine Einrichtung zur Optimierung des Drehzahlregelverhaltens eines Elektrokleinstmotors für zahnärztliche Zwecke bekannt. Mit diesem ist es möglich, den Elektrokleinstmotor so zu betreiben, daß er in jedem Drehzahlbereich optimal regelbar ist. Dazu enthält die Einrichtung ein erstes Modul zur Regelung der Drehzahl durch EMK-Messung sowie ein zweites Modul zur Regelung der Drehzahl durch RI-Kompensation sowie Mittel, welche in Abhängigkeit von vorgebbaren Drehzahldaten entscheiden, welches der beiden Module mit welchem Anteil die Drehzahlregelung des Motors übernimmt.

Bei der aus DE 44 12 413 C1 bekannten Lösung ist der Umstand von Nachteil, daß in bestimmten Drehzahlbereichen die Stabilität der Drehzahl nicht immer gewährleistet ist und es beim Übergang zwischen den Regelarten RI-Kompensation und EMK-Regelung zu unerwünschten Drehzahlsprüngen kommen kann. Bei stufenloser Drehzahlregelung ist es jedoch erforderlich, zur Vermeidung undefinierter Zustände einen Hysteresebereich einzurichten. Um den Hysteresebereich zu umgehen, werden stufenweise Drehzahländerungen vorgegeben, was aber als Nachteil nur fest vorwählbare Drehzahlvorwahlen zulässt. Unerwünschtes Umschalten zwischen den angegebenen Regelarten kann auch bei nicht optimalem Arbeitspunkt des Elektromotors durch Temperaturschwankungen insbesondere bei RI-Kompensation oder bei der Regelung in hohen Drehzahlbereich auftreten. Ferner ist bei der Regelung in hohen Drehzahlbereichen nach der EMK-Regelung eine Umschaltung der Verstärkung / Abschwächung der Generatorspannung erforderlich, um die Generatorspannung auf für eine Regelung verwendbare Werte zu bringen.

Angesichts der den Lösungen des Standes der Technik anhaftenden Nachteile liegt der Erfindung die Aufgabe zugrunde, einen drehzahlstabilen Übergang zwischen zwei Regelarten zur Verfügung zu stellen, wobei die Regelarten jeweils unterschiedliche Drehzahlbereiche abdecken.

Erfindungsgemäß wird diese Aufgabe dadurch gelöst, daß eine Einrichtung für Drehzahlregelung eines Elektrokleinstmotors zu zahnärztliche Zwecke sowohl ein EMK-Regelbaustein als auch einen weiteren Regelbaustein zur RI-Regelung des Elektrokleinstmotors sowie ein Logikelement zur Auswahl des Regelbausteines zur Regelung des Elektrokleinstmotors enthält, wobei beide Regelbausteine permanent mit einer Sollvorgabe beaufschlagt sind und das impulsbreitere Ausgangssignal der Regelbausteine die Regelungsart des Elektrokleinstmotors bestimmt.

Die mit der erfindungsgemäßen Lösung erzielbaren Vorteile liegen darin, daß die beiden Regelarten zu jeder Zeit aktiv sind und sich bei der Übergabe von einer Regelart zur jeweils anderen Regelart kein Drehzahlsprung einstellen kann, ferner läßt sich eine Übergabehysterese so vollständig vermeiden. Das jeweils am Logikbaustein anliegende stärkere Signal dient zur Bestimmung der Regelart der Leistungsstufe, die den Elektrokleinstmotor ansteuert. Da dies auch unter Belastung gewährleistet ist, kann eine wesentliche Anforderungen an zahnärztliche Instrumente erfüllt werden.

In weiterer vorteilhafter Ausgestaltung des erfindungsgemäßen Gedankens ist der als ODER-Verknüpfung realisierte Logikbaustein permanent mit den Impulssignalen des RI-Regelbausteins bzw. des EMK-Regelbausteins beaufschlagt, so daß die Signale konstant anliegen und es keines Signalaufbaus an den Regelbausteinen bedarf, der seinerseits zur Drehzahlinstabilität führen könnte. Der RI-Regelbaustein wird mit dem an der Leistungsstufe des Elektrokleinstmotors gemessenen Wert des Motorstroms beaufschlagt, an ihm liegt ferner eine Sollvorgabe permanent an. Zu diesem Zwecke ist die dem Elektrokleinstmotor ansteuernde Leistungsstufe mit einer Strommesseinheit ausgestattet, über welchen der anliegende Motorstrom gemessen und als Einflussgröße an den RI-Regelbaustein zurückgemeldet werden kann.

Daneben enthält die Leistungsstufe eine Messeinheit zur Bestimmung der EMK am Elektrokleinstmotor. Mittels dieser Messeinheit wird der EMK-Regelbaustein neben der Sollvorgabe mit dem Istwert der EMK des Elektrokleinstmotors beaufschlagt, so daß am EMK-Regelbaustein die Signale zur Ermittlung des Ausgangssignals des die Leistungsstufe steuernden Logikbausteins stets anliegen.

Am bevorzugt als ODER-Verknüpfung ausgebildeten Logikbaustein liegen die Ausgangssignale beider Regelbausteine permanent an, so daß sich die Regelungsart, RI-Kompensation oder EMK aus dem am Logikbaustein anstehenden impulsbreiteren Signal bestimmen läßt, welches dann als Ansteuersignal der den Elektrokleinstmotor regelnden Leistungsstufe dient.

Anhand einer Zeichnung sei die Erfindung nachstehend im Detail erläutert.

Es zeigt:
- Fig. 1: ein zahnärztliches Handstück, welches an einer Kupplungsstelle geteilt ist,
- Fig. 2: den gesamten Regelkreis zur Ansteuerung des Elektrokleinstmotors,
- Fig. 3: die aus Fig. 2 entnommenen Bausteine und Signalflüsse zur Ermittlung der Regelungsart der dem Elektrokleinstmotor beaufschlagenden Leistungsstufe und
- Fig. 4: die Kennlinien nach RI-Kompensation, nach EMK sowie die aus der Kombination beider Regelungsarten resultierende Kennlinie mit stetigem Übergangsbereich.

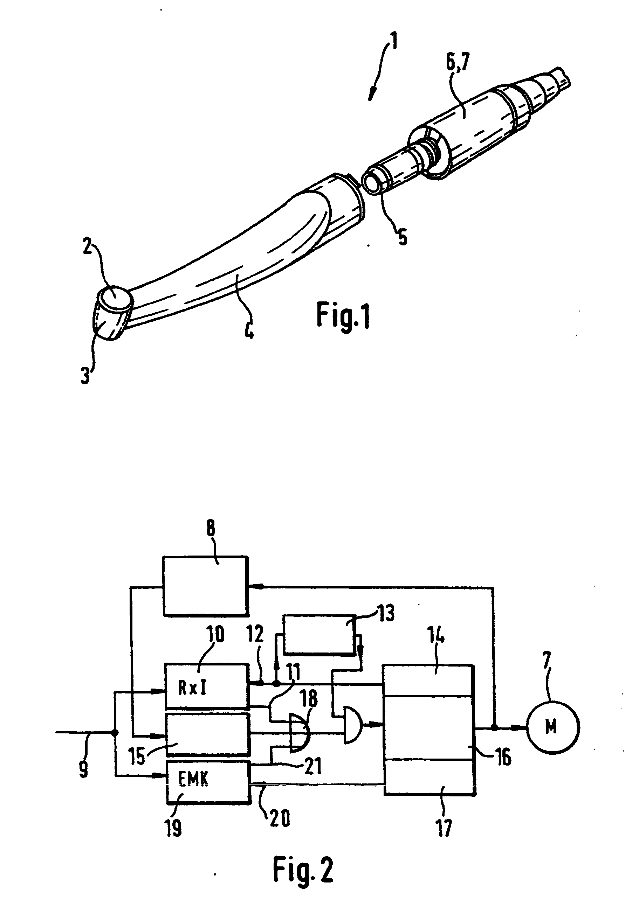

Fig. 1 zeigt ein zahnärztliches Handstück, welche an seiner Kupplungsstelle geteilt ist.

Das zahnärztliche Handstück 1 besteht aus einem oberen Teil, welches an einem Kopf teil 3 einen Werkzeugansatz 2 aufweist und aus einem die nicht dargestellte Antriebswelle des Werkzeugs aufnehmenden Halsteil 4. Im unteren Teil des zahnärztlichen Handstückes 1 ist der Antrieb 6, beispielsweise als Elektrokleinstmotor 7 ausgebildet, aufgenommen, der über eine Kupplung 5 auf die im Halsstück 4 des oberen Teiles aufgenommene Antriebswelle des zahnärztlichen Werkzeuges einwirkt.

Fig. 2 zeigt den Regelkreis in seinen wesentlichen Komponenten, mit welchem der in einem zahnärztlichen Handstück 1 aufgenommene Elektrokleinstmotor 7 in seinem Drehzahlbereich von 1.00 min⁻¹ bis etwa 40.000 min⁻¹ gesteuert wird.

Eine Sollvorgabe 9, beispielsweise eine vorgegebene Solldrehzahl, an einem zahnärztlichen Werkzeug wird je einem RI-Regelbaustein 10 und einem EMK-Regelbaustein 19 zugeführt. Den beiden Regelkreisbausteinen 10, 19 werden darüber hinaus das an der Leistungsstufe 16 des Elektrokleinstmotors 7 ermittelte Signal 12 des aktuellen Motorstromes zugeführt. Ferner wird ein Signal 20, welches der aktuellen EMK des Elektrokleinstmotors 7 entspricht, an den entsprechenden Eingang des EMK-Regelbausteines 19 angelegt. Das Signal 12, dessen Wert dem aktuellen Motorstrom am Elektrokleinstmotor 7 entspricht, wird ausschließlich dem RI-Regelbaustein 10 zugeführt, wobei es ebenfalls als Eingangssignal einem Strombegrenzer 13 zugeführt werden kann, dessen Ausgangssignal einen weiteren Logikbaustein gemäß Fig. 2 beaufschlagt.

Der Elektrokleinstmotor 7 wird über die Leistungsstufe 16 durch ein die Spannung steuerndes Signal angesteuert, welches gleichzeitig einem Spannungsmesser 8 zugeführt wird, dessen Ausgangssignal als Eingangssignal für eine Spannungsregelung 15 dient. Das Ausgangssignal der Spannungsregelung 15 seinerseits dient als Eingangssignal für einen weiteren Logikbaustein, an dessen Eingangsseite das Ausgangssignal des Strombegrenzers 13 zur Momentbegrenzung anliegt. Das Ausgangssignal des Logikbausteines 18 dient als Eingangssignal für den weiteren Logikbaustein, der die Leistungsstufe 16 ansteuert.

An der Leistungsstufe 16 für den Elektrokleinstmotor 7 befinden sich eine Messeinheit 14 zur Ermittlung des Motorstroms, ferner eine Messeinheit 17 zur Ermittlung der elektromotorischen Kraft (EMK).

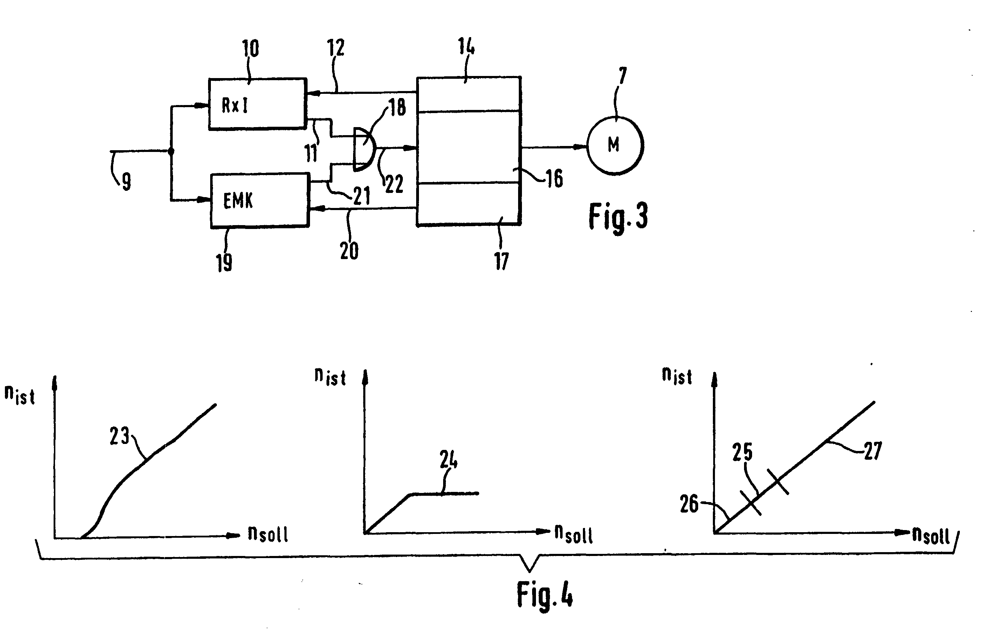

Fig. 3 zeigt die bereits in Fig. 2 enthaltenen Bausteine und Signalflüsse zur Ermittlung der Regelungsart an der den Elektrokleinstmotor ansteuernden Leistungsstufe 16.

Die Sollvorgabe 9 liegt als Eingangssignal permanent sowohl am RI-Regelbaustein 10 als auch am EMK-Regelbaustein 19 an. Während dem RI-Regelbaustein 10 ein der Istgröße 12 des am Elektrokleinstmotor 7 herrschenden Motorstroms entsprechendes Signal zugeführt wird, liegt an EMK-Regelbaustein 19 ein der aktuellen EMK entsprechendes Signal 20 an; mithin werden beide Regelbausteine 10, 19 sowohl permanent mit der Sollvorgabe 9 beaufschlagt, ferner mit regelartspezifischen Größen 12 bzw. 20. Die Ausgangsgröße 11 des RI-Regelbausteins 10 wird einem als ODER-Verknüpfungsglied ausgeführten Logikbaustein 18 zugeführt. Die Ausgangsgröße 21 des EMK-Regelbausteins 19 wird dem Logikbaustein 18 ebenfalls auf dessen Eingangsseite zugeführt. Somit stehen auf der Eingangsseite des Logikbausteines 18 die Ausgangssignale 11, 21 der beiden Regelbausteine 10 und 19 konstant an, wobei das stärkere, d.h. das impulsbreitere Signal, die Regelungsart bestimmt, nach der die Leistungsstufe 16 die Drehzahl am Elektrokleinstmotor 7 steuert. Im niedrigen Drehzahlbereich von 0 bis etwa 2.000 min⁻¹ wird die Istdrehzahl des Elektrokleinstmotors 7 entsprechend der EMK-Kennlinie (mittleres Diagram in Fig. 4) gesteuert. In diesem Drehzahlbereich ergibt sich ein linearer Zusammenhang zwischen der Drehzahlvorgabe nₛₒₗₗ und der am Elektrokleinstmotor 7 damit am zahnärztlichen Werkzeug tatsächlich vorliegender Istdrehzahl nᵢₛₜ.

Entspricht die Sollvorgabe 9 einer niedriger einzustellenden Drehzahl, ist das Ausgangssignal 21 des EMK-Regelbausteines 19 das impulsbreitere Signal der beiden an der Eingangsseite des Logikbausteines 18 anliegenden Ausgangssignale 11, 21. Das Ausgangssignal 22 des Logikbausteines 18 wird in diesem Falle die Leistungsstufe 16 des Elektrokleinstmotors 7 gemäß des Ausgangssignals des EMK-Regelbausteines 19 steuern. Liegt die Drehzahlvorgabe nₛₒₗₗ in einem höheren Drehzahlbereich, wird an dem RI-Regelbaustein 10 das impulsstärkere Ausgangssignal 11 erzeugt, welches wiederum gemeinsam mit dem nun impulsschwächer ausgeprägten Signal 21 des EMK-Regelbausteines 19 auf der Eingangsseite des Logikbausteines 18 anliegt. Das in diesem Falle die Leistungsstufe 16 beaufschlagende Ausgangssignal 22 des Logikbausteines 18 wird die Leistungsstufe 16 des Elektrokleinstmotors 7 nach der Regelungsart EMK steuern, welche gemäß der Kennlinie 23 im oberen Drehzahlbereich einen linearen Zusammenhang zwischen Solldrehzahlvorgabe und sich einstellender tatsächlicher Drehzahl liefert.

Liegt der Arbeitspunkt des Elektrokleinstmotors 7 in einem Drehzahlbereich, der in den Übergangsbereich 25 gemäß des rechten Diagramms in Fig. 4 fällt, so liegt das am Logikbaustein 18 anliegende impulsbreitere, das stärkere Signal, die Regelungsart der Leistungsstufe 16 fest. Es unterbleibt ein Hin- und Herschalten zwischen den beiden Regelungsarten im Übergangsbereich 25, da stets beide durch die Regelbausteine 10, 19 implementierten Regelungsarten aktiviert sind. Die durch den Logikbaustein 18 anhand der Impulsbreite der Ausgangssignale 11, 21 erfolgende Festlegung der Regelungsart erfolgt für den Zahnarzt nicht wahrnehmbar - insbesondere nicht durch einen Drehzahlsprung am zahnärztlichen Werkzeug wahrnehmbar.

Aus dem im rechten Teil der Fig. 4 wiedergegebenen Kennlinie im Zusammenhang folgt, daß der Übergangsbereich 25 zwischen dem durch ein RI-Verhalten charakterisierten Kennlinienbereich 27 und dem durch ein EMK-Regelungsverhalten gekennzeichneter Bereich 26 ebenfalls ein linear Zusammenhang entsteht, dem Drehzahlsprünge fremd sind. Durch das Kriterium der Berücksichtigung der an Eingabeseite des Logikbausteines 18 anliegenden impulsbreiteren Signals der beiden Ausgangssignale 11, 21 ist ein fließender Übergang zwischen den beiden genannten Regelungsarten auch unter Last realisierbar, der Drehzahlschwankungen gänzlich vermeidet. Die Überlagerung der Kennlinien 23 bzw. 24 im Übergangsbereich 25 erzeugt kein Hysterese-Verhalten, da das jeweils impulsbreitere Signal der Signale 11, 21 zur Bestimmung der Regelungsart dient.

Die in analoger Schaltungstechnik ausgeführte Einrichtung kann auch in digitaler Form realisiert sein, beispielsweise auf einen Mikroprozessor implementiert sein.

### Bezugszeichenliste

- 1: zahnärztliches Handstück
- 2: Werkzeugeinsatz
- 3: Kopfteil
- 4: Halsteil
- 5: Kupplung
- 6: Antrieb
- 7: Elektromotor
- 8: Spannungsmesser
- 9: Sollvorgabe
- 10: RI-Regelbaustein
- 11: RI-Ausgang
- 12: Stromistwerteingang
- 13: Strombegrenzer
- 14: Strommesseinheit
- 15: Spannungsregelung
- 16: Leistungsstufe
- 17: EMK-Messeinheit
- 18: Logikbaustein
- 19: EMK-Regelbaustein
- 20: EMK-Eingang
- 21: EMK-Ausgang
- 22: Logik-Ausgangssignal
- 23: RI-Regelkurve
- 24: EMK-Regelkurve
- 25: Übergangsbereich
- 26: EMK-Bereich
- 27: RI-Bereich

## Patentansprüche

1. Einrichtung zur Drehzahlregelung eines Elektrokleinstmotors (7) für zahnärztliche Zwecke, mit einem EMK-Regelbaustein (19) und einem weiteren Regelbaustein (10) zur RI-Regelung des Elektrokleinstmotors (7) und einem Logikelement (18) zur Auswahl des Regelbausteines (10, 19) zur Regelung des Elektrokleinstmotors (7), **dadurch gekennzeichnet, daß** beide Regelbausteine (10, 19) permanent mit einer Sollvorgabe (9) beaufschlagt sind und das impulsbreitere Ausgangssignal (11, 21) der Regelbausteine (10, 19) die Regelungsart des Elektrokleinstmotors (7) bestimmt.

2. Einrichtung zur Drehzahlregelung gemäß Anspruch 1, **dadurch gekennzeichnet, daß** der Logikbaustein (18) permanent mit dem Impulssignal (11, 21) des RI-Bausteines (10) bzw. des EMK-Bausteines (19) beaufschlagt ist.

3. Einrichtung zur Drehzahlregelung gemäß Anspruch 2, **dadurch gekennzeichnet, daß** das Logikelement (18) eine ODER-Verknüpfung beinhaltet.

4. Einrichtung zur Drehzahlregelung gemäß Anspruch 1, **dadurch gekennzeichnet, daß** dem RI-Regelbaustein (10) der an der Leistungsstufe (16) gemessene Wert des Motorstromes (12) zugeführt wird.

5. Einrichtung zur Drehzahlregelung gemäß Anspruch 4, **dadurch gekennzeichnet, daß** die Leistungsstufe (16) eine Strommesseinheit (14) enthält.

6. Einrichtung zur Drehzahlregelung gemäß Anspruch 1, **dadurch gekennzeichnet, daß** dem EMK-Regelbaustein (19) der Istwert (20) der Motor-EMK zugeführt wird.

7. Einrichtung zur Drehzahlregelung gemäß Anspruch 6, **dadurch gekennzeichnet, daß** die Leistungsstufe (16) eine Messeinheit (17) zur Bestimmung des EMK am Elektrokleinstmotor (7) enthält.

8. Verfahren zur Drehzahlregelung eines Elektrokleinstmotors (7), **dadurch gekennzeichnet, daß** die Regelungsart der Leistungsstufe (16) des Elektrokleinstmotors (7) über dessen gesamten Drehzahlbereich in Abhängigkeit von an einem Logikelement (18) permanent anliegenden Impulssignalen (11, 21) eines RI-Regelbausteines (10) bzw. eines EMK-Bausteines bestimmt wird.

## Claims

1. A system for effecting speed control of a miniature electric motor (7) for dental purposes, comprising an emf regulator (19) and a further regulator (10) for effecting RI control of the miniature electric motor (7), and a logic device (18) for selecting the regulator (10, 19) to effect control of said miniature electric motor (7), **characterized in that** a performance requirement (9) is permanently applied to both of the regulators (10, 19) and that that output signal (11, 21) of the regulators (10, 19) which has the greater pulse width determines the control system for said miniature electric motor (7).

2. A system for effecting speed control as defined in claim 1, **characterized in that** the pulse signal (11, 21) of the RI device (10) or the emf device (19) is permanently applied to the logic device (18).

3. A system for effecting speed control as defined in claim 2, **characterized in that** the logic device (18) includes an OR operation.

4. A system for effecting speed control as defined in claim 1, **characterized in that** that value of the motor current (12) which is measured at the power stage (16) is fed to the RI regulator (10).

5. A system for effecting speed control as defined in claim 4, **characterized in that** the power stage (16) incorporates a current measuring unit (14).

6. A system for effecting speed control as defined in claim 1, **characterized in that** the actual value (20) of the motor emf is fed to the emf regulator (19).

7. A system for effecting speed control as defined in claim 6, **characterized in that** the power stage (16) contains a test unit (17) for determining the electromotive force produced by the miniature electric motor (7).

8. A method of effecting speed control of a miniature electric motor (7), **characterized in that** the control system of the power stage (16) of said miniature electric motor (7) is determined over its entire speed range depending on the pulse signals (11, 21) of an RI regulator (10) or an emf regulator which are permanently applied to a logic device (18).

## Revendications

1. Dispositif permettant de réguler la vitesse de rotation d'un micromoteur électrique (7) à usage dentaire, comprenant un composant de régulation FEM (19) et un autre composant de régulation (10) pour la régulation RI du micromoteur électrique (7) et un élément logique (18) pour sélectionner le composant de régulation (10, 19) pour la régulation du micromoteur électrique (7), **caractérisé en ce que** les deux composants de régulation (10, 19) sont alimentés en permanence par une valeur de consigne (9) et **en ce que** le signal de sortie (11, 21) à impulsion plus large des composants de régulation (10, 19) détermine le mode de régulation du micromoteur électrique (7).

2. Dispositif de régulation de vitesse de rotation selon la revendication 1, **caractérisé en ce que** le composant logique (18) est alimenté en permanence par le signal impulsionnel (11, 21) du composant RI (10) ou du composant FEM (19).

3. Dispositif de régulation de vitesse de rotation selon la revendication 2, **caractérisé en ce que** l'élément logique (18) contient une liaison OU.

4. Dispositif de régulation de vitesse de rotation selon la revendication 1, **caractérisé en ce que** la valeur du courant de moteur (12) mesurée à l'étage de puissance (16) est amenée au composant de régulation RI (10).

5. Dispositif de régulation de vitesse de rotation selon la revendication 4, **caractérisé en ce que** l'étage de puissance (16) contient une unité de mesure de courant (14).

6. Dispositif de régulation de vitesse de rotation selon la revendication 1, **caractérisé en ce que** la valeur réelle (20) de la FEM du moteur est amenée au composant de régulation FEM (19).

7. Dispositif de régulation de vitesse de rotation selon la revendication 6, **caractérisé en ce que** l'étage de puissance (16) contient une unité de mesure (17) pour déterminer la FEM au niveau du micromoteur électrique (7).

8. Procédé permettant de réguler la vitesse de rotation d'un micromoteur électrique (7), **caractérisé en ce que** le mode de régulation de l'étage de puissance (16) du micromoteur électrique (7) est déterminé pour toute la plage de vitesses de rotation de celui-ci en fonction de signaux impulsionnels (11, 21) d'un composant de régulation RI (10) ou d'un composant FEM (19) présents en permanence, sur un élément logique (18).
